# EUROPEAN PATENT APPLICATION

(11) **EP 2 814 020 A2**
(43) Date of publication of application: **17.12.2014**
(21) Application number: 14396002.9
(22) Date of filing: 21.03.2014
(51) Int. Cl.: G09B 19/00, A63B 24/00

(54) **A system and method for detecting golf swing with a ball impact**

(30) Priority: 28.03.2013 GB 201305733
(71) Applicant: CaddieON Inc., 90620 Oulu (FI)
(72) Inventor: Voutilainen, Osmo, 90650 Oulu (FI); Rantakokko, Tapani, 90460 Oulunsalo (FI); Käsmä, Tommi, 90570 Oulu (FI)

(57) **Abstract**

The invention relates to a method, system, detection apparatus and computer program for recognizing a collision of a golf club with a golf ball. In the invention the recognition procedure is configured to be executed partly in a motion sensor (22) of a detection device (2), party in the processor unit (20) of the detecting device and a mobile information processing device (6). The most complex processing and computation steps are executed in the processor unit (60) of the mobile information processing device (6). Due to the shared computations the result of the algorithm is accurate. Also the power consumption of the detecting device (2) is low which provides for a long operating time and accurate hit detection at the same time.

## Description

### Technical Field of the Invention

The invention relates to a golf swing detection system, a golf swing detection device and a computer program utilized in the golf swing detection system.

### Background of the Invention

Golf assistants, caddies, enable professional players to focus on their game. Caddies can take care of various game related tasks during the round. The caddie may carry the bag, suggest club selection based on player records, keep track on strokes and assist in reading putting lines. Already before the game, the caddie can be of help e.g. by supporting planning of the game strategy. In many cases the player and the caddie form a duo having a long relationship, so that the caddie becomes eventually almost irreplaceable.

Most of the ordinary golf players cannot afford to use caddie services and if they do, at least the benefit from knowing the player's skills well enough is missed. Modern technology may be utilized to overcome the obstacles and there have been some attempts to do so. But due to only partial implementation the overall effect has been quite the contrary. An extra device just disturbs the player, it may provide inadequate information, distracts the player's attention from the game and does not really support in developing skills and achieving better results. These particular issues are addressed by the system and method presented in this application.

### Summary of Some Examples of the Invention

The object of the present invention is to provide a golf swing detection system, a golf swing detection device and a computer program utilized in the golf swing detection system.

The objects of the present invention are fulfilled by providing a golf swing detection system comprising:
- a swing detection device configured to be attached to a golf player's forearm, the detection device comprising:
   - a battery;
   - a power/energy management circuit;
   - a tag reader;
   - a motion sensor;
   - a processor unit comprising a memory unit including a computer program;
   - the memory unit and the computer program configured to, with the processor unit, cause the swing detection device at least to process motion sensor data and;
   - a wireless transceiver; and
- a mobile device comprising computer program to process motion data received from the swing detection device,
**characterized** in that the ball hit recognition process comprises at least one detection stage in the swing detection device or in the mobile device (6) where a particular detection stage comprises a particular gesture recognizer accomplished by program modules that are configured to recognize particular golf swing sub-gestures or a collision event between a golf club and a golf ball.

Also the objects of the present invention are fulfilled by providing a golf swing detection device comprising:
- a battery;
- a power/energy management circuit;
- a club identification reader;
- a wireless transceiver;
- a motion sensor;
- a processor unit comprising a memory unit including a computer program module;
- the memory unit and the computer program module configured to, with the processor unit, cause the swing detection device at least to process motion sensor data,
characterized in that a golf ball hit recognition process comprises at least one detection stage in the swing detection device and that a first detection stage comprises a particular gesture recognizer accomplished by program modules that are configured to recognize at least a first golf swing sub-gesture and a second golf swing sub-gesture.

Also the objects of the present invention are fulfilled by providing a computer program comprising at least one of the following computer program modules:
- a first computer program module including computer readable code for detecting a stillness sub-gesture preceding swing sub-gestures;
- a second computer program module including computer readable code for detecting a collision event of the golf club with a golf ball;
- a third computer program module including computer readable code for detecting swing sub-gestures including a backswing sub-gesture, a downswing sub-gesture, a collision event, and a follow through sub-gesture.

Some advantageous embodiments of the invention are disclosed in the dependent claims.

Further scope of applicability of the present invention will become apparent from the detailed description given hereafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given herein below and accompanying drawings which are given by way of illustration only, and thus are not limitative of the present invention and wherein
- Fig. 1: shows an exemplary representation of an electronic caddie arrangement where the golf swing detection device according to the invention is utilized;
- Fig. 2: shows an example where a golfer identifies a golf club with the golf swing detecting device according to the invention;
- Fig. 3: shows an example where a golfer wearing the golf swing detecting device according to the invention is concentrating on a stroke (in a stillness sub-gesture);
- Fig. 4: shows an example of a trajectory of the golf club head during a golfer performing an example of a typical full swing;
- Fig. 5: shows an example of a trajectory of a detection device during a full swing;
- Fig. 6a: shows an example of an acceleration signal captured with a detection device during a full swing with a driver;
- Fig. 6b: shows an example of an acceleration signal when it is divided into separate swing phases according to the invention;
- Fig. 7a: shows main electrical components of the swing detection device according to the invention;
- Fig. 7b: shows an exemplary layer diagram of the division of the recognition algorithm according to the invention between the processing units of the swing detection device and a mobile device;
- Fig. 8: shows as a flow chart an example of a stillness recognizing procedure in the swing detection system according to the invention;
- Fig. 9: shows as a flow chart an example of a hit recognizing procedure in the swing detection system according to the invention;
- Fig. 10: shows as a flow chart an example of a peak recognizing procedure in the swing detection system according to the invention, and;
- Fig. 11: shows as a flow chart an exemplary overview of a complex recognizing procedure in a system according to the invention

### Detailed description of the drawings

In the following description, considered embodiments are merely exemplary, and one skilled in the art may find other ways to implement the invention. Although the specification may refer to "an", "one" or "some" embodiment(s) in several locations, this does not necessarily mean that each such reference is made to the same embodiment(s), or that the feature only applies to a single embodiment or all embodiments. Single feature of different embodiments may also be combined to provide other embodiments.

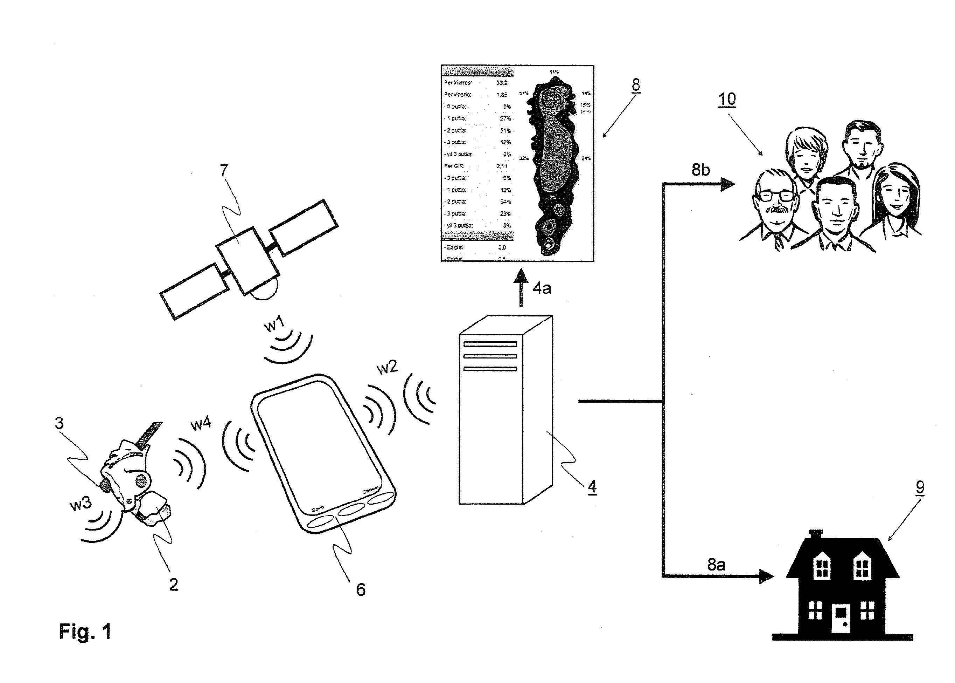

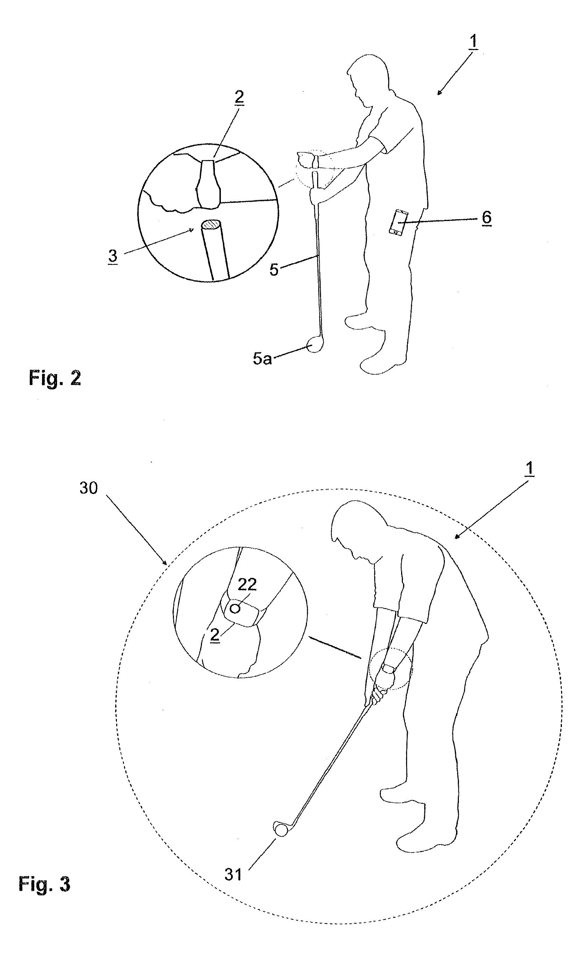

An exemplary embodiment of an advanced electronic caddie system, CaddieON™, is shown in **Figure 1****.** The electronic caddie system comprises golf club identifier tags (reference 3 in Fig. 2) on the golf clubs, advantageously a wrist-borne golf swing detection device 2, a mobile device 6 (for example a smartphone) and a backend server 4. The golf club identifier tags 3, the golf swing detection device 2, the mobile device 6, and the backend server 4 are connected together wirelessly; references w4, w2, and w3 in Fig. 1.

The player installs the computer program accomplishing the procedure according to the invention on his or her mobile device 6 and marks his or her golf set with the club identifier tags 3. The mobile device 6 may be for example a smartphone, a tablet or a laptop. The golfer has activated a wireless connection between the swing detection device 2 and the mobile device 6, reference w4. The golfer wears the swing detection device 2 on his or her wrist or forearm during the game. The swing detection device 2 reads the club information from the tag 3 before a stroke is taken, records the stroke and transfers data to the mobile device 6. The mobile device 6 advantageously combines stroke data with the available location information, for example satellite 7 based location information (GPS, Glonass, etc.) (reference w1).

By utilizing the swing detection device 2 according to the invention the golfer can focus on his or her game to the maximum. The mobile device 6 keeps track of all the strokes that the swing detection device 2 has indicated during the game. Advantageously it offers a review and manual editing options for the player as well. Game data 8 is stored to and made available 4a simultaneously on the backend server 4, reference w2. The player can choose to get quick feedback about the status of his or her game on the display of the mobile device 6 at any time during the round through application views such as scorecard, rangefinder or course map. Advantageously also other relevant information is available, for example a ball lie can be recorded and information about weather conditions is available. This adds value to analysing the round and thus improving the skills more comprehensively.

The electronic caddie system can also suggest suitable game strategy like a stroke plan and clubs based on the golfer's former statistics and course information available online from the backend server 4. The backend server 4 offers a personal portal for accessing and analysing the game afterwards. There can be a separate portal for golf instructors so they can get more detailed information about their group. The server collects also versatile course and game data for the golf course operators 9 to improve the playing experience and thus the attractiveness of the course.

There are thirteen clubs and a putter in a typical golf bag. The player attaches a tag 3 to each of the clubs so that the clubs can be identified when a stroke is about to be taken. Tags 3 can advantageously be based on any wireless technology like RFID (Radio Frequency IDentification) or NFC (Near Field Communication). The tag may also be an entity including optically readable code that can be attached to the golf club. An individual code, club ID, is written to the tags 3 when it is manufactured. The swing detection device 2 includes advantageously an integrated reader antenna that is brought to a close proximity of tag 3 so that tag ID can be read either wirelessly or optically. An advantageous position of the tag 3 is on the grip or at the end of the club or on the shaft. That way the reading experience of the club ID from the tag 3 is most convenient. Antenna of the swing detection device 2 is designed so that reading performance is optimal for the tag 3. In one advantageous embodiment the antenna is embedded into the wrist band of the swing detection device 2.

A 3-axis accelerometer records swing and stroke related data enabling reliable detection of the very moment when the club hits the ball. The hit detection algorithm according to the invention runs advantageously on the microprocessor in the swing detection device 2 or alternatively in the mobile device 6. Naturally, the algorithm can also be partitioned between the existing processors as seen feasible in the chosen embodiment. The complete algorithm comprises several algorithms in which sub-gestures characteristic to a particular stroke gesture or event are utilized. In this context a gesture means a physical movement of the golfer that is visible to the human eye. A sub-gesture is a part of a longer, continuous gesture made by the golfer. One part of the algorithm according to the invention is simple enough to be implemented for example with a state machine that can be found in the prior art accelerometers.

Different hardware (for example field-programmable gate array (FPGA)) and software implementations for all algorithms according to the invention are possible. The swing detection procedure according to the invention provides improved power efficiency that means a longer overall usage time. The swing detection system according to the invention allows utilizing multiple algorithms for different types of strokes and clubs. The algorithms can be executed simultaneously in different entities of the electronic caddie system or one at the time. Club ID or golfer position on the golf course can advantageously be used as a parameter for selecting the best detection algorithm. One may also choose to apply auto-adaptive algorithms in the future so that player specific gestures are recognized better.

One part of the personal electronic caddie system according to the invention is an application that runs on the mobile device 6. It can be used as a stand-alone golf application but advantageously it may be used in conjunction with a backend server 4 (reference w2). The mobile device 6 can be based on any platform providing needed software tools for 3^{rd} party developers, methods for installation of downloadable application, access to satellite 7 positioning, (for example GPS or Glonass, reference w1), and wireless data connectivity sub-systems (for example Bluetooth, WLAN or a cellular connection, references w2 and w4). Some smartphone platforms of this kind are for example Android, iOS and Windows Phone, but there are proprietary platforms to which the electronic caddie system according to the invention can be implemented.

The swing detection application implements a user interface having several informative display views to be utilized during a round of golf. The main ones are as follows.

The main view is utilized for making golfer and game related basic settings, selections and preferences. The golfer can advantageously use the view to choose to enter player data; basic application settings; swing detection device 2 and club 5 set settings; selection of course to be played; and to start the game. Extra information of the local weather, golf course operators' events etc. can be offered to the players through news feed.

The score card view is an electronic version of golf score card indicating basic data of ongoing game such as the number of the played hole, its par value and number of strokes the player has taken. Score card data is based on individual course data that is collected automatically and confirmed by the golfer. The score card is transferred to the player portal on the backend server 4 after the hole has been played or the round completed. Besides by the player himself, the results could be utilized by different golf information systems for example for tournaments, competitions and calculating handicaps.

The course strokes view presents stroke information for an individual hole as a chronological list, i.e. a stroke number, club used, ball lie, and distance per stroke. Data collection is automated by the electronic caddie system according to the invention but before storing the data a golfer reviews and confirms the list. To add penalty strokes or, in a case where there are errors in the collected data, an option to edit each line as well as delete and add strokes are advantageously offered. The final list is utilized by the score card view and synched to the backend server 4.

The range finder view is a summary presentation showing distances to points of interest on the current course. Specifically the distance from the golfer to the hole and known hazards are calculated based on the measured location and the electronic map information. This information helps planning the remaining strokes and selection of the suitable clubs. The location is measured with the positioning sub-system on mobile device 6 and information about hazards is fetched from the course database on the backend server 4.

The map view is a graphical map view of the golf course. It combines relevant parts of the course review and the range finder views with free online map data such as Google Earth. Positions of each taken stroke, the current position of the ball, the game plan to the green, the position of the hole and locations of hazards are overlaid on the map. On golfer's choice also stroke positions and their end results from the previous rounds can advantageously be overlaid on the map by making a simple database query. An actual distance of taken strokes and a distance of the planned strokes and from the ball to the hazards can be shown. A projected ball landing area for planned strokes can be calculated and made visual on the map. They are based on the golfer's history data of the stroke accuracy.

Planned strokes can advantageously be edited on a touch screen of the mobile device 6. Also a suggested club for the next stroke or other relevant information may be shown. The map can be zoomed and panned on the touch display with fingers or automatically when the game proceeds and the player is for example approaching the green and requires a more detailed view. Measuring a distance between arbitrary points of interest is also possible. Also the position of other players using the electronic caddie system according to the invention can be overlaid on the map. In that way it is possible to warn a player from taking a shot if other groups are within the reach of the striking distance of the player. This feature improves the safety on the golf course especially when the player has no visibility to the projected ball landing area.

The electronic caddie system according to the invention also offers many other possibilities to provide useful information to the player. Highlights after the game (the best/longest strokes for example), notification of other players' performance after storing the score card and a history view (for example a summary of the player's previous scores on the current course), to mention a few.

According to the invention, the electronic caddie system is also able to detect the ball lie automatically. Different surfaces on each hole of the golf course (i.e. tee boxes, fairways, greens, sand hazards) are mapped defining a set of coordinate points from the boundary of each object. The coordinates may form a polygon and each polygon is advantageously identified for a type of surface they represent. The coordinate set of each object (or polygon) is uploaded to the application before the golfer starts to play. When the swing detection device 2 detects a stroke, it sends the information to the mobile device 6. The golfer's coordinates given by the GPS receiver of the mobile device 6 are checked against the coordinate data of the polygons. When the golfer's coordinates fall inside a defined polygon, the type of surface of the polygon is given to the stroke. These method steps can advantageously be implemented on the mobile device 6 or on the backend server 4.

The backend systems of the electronic caddie system according to the invention comprise advantageously the following main parts: a web server 4 and a database connected to it, portals for players and the golf course operator 9, and communication interface.

Users can access the web server 4 at any time with a browser running on the mobile device 6 or on a personal computer. They are for example able to study information about golf course operators 9, available courses and personal game history before the game. The electronic caddie system application utilizes a specific application programming interface (API) to communicate with the backend server 4.

The database contains information about the registered golfers and golf course operators 9. The information, reference 8, may also comprise player profiles, score cards and detailed game history, contact information of golf course operators and course details (number of holes, course rating, scorecard, flag position, etc.). Also player and game related information may be collected and uploaded online during the game by the mobile device 6. Information related to the golf course operator 9 is maintained by a service provider.

The backend server 4 advantageously analyses the stored data and provides versatile statistic and graphic views for players and golf course operators 9 (reference 8a) through dedicated portals. Scheduled calculation routines calculate aggregated statistics for various sizes of geographical areas or entities (i.e. global, country, and golf course specific) from all played golf rounds of all players.

The player portal shows measures and development of golfer's own game. It also gives possibilities to share information about played games in social media or directly to other registered users and portal visitors 10 (reference 8b). Individual golfers can compare their statistics with other golfers according to different geographical areas or entities like global, country, or golf course. The golfer can also compare his or her statistics with the average values of all golfers in different categories, based on the total number of strokes. For example, a golfer can choose to compare his or her statistics against the average of all golfers, whose round score is between 11 and 20 strokes over par or with golfers whose score is between 21 and 30, and so on. Moreover, the system enables handicap calculation and statistics down to individual club.

The golf course portal is the view for the operator 9. It shows current positions of all players using the electronic caddie system according to the invention. History data shows how the course has been played: the route players have taken on the course, where they have stroke the ball from. This information can be used to proactively identify wearing on the course or monitor round durations. Aggregated data from the golfers can be provided back to them through course specific web pages showing for example an average playing time on the course, the difficulty of each hole, daily highlights from the field, etc. These types of views can be easily generated on need basis.

Communication between the electronic caddie application in the mobile device 6 and the backend server 4 is advantageously done through representational state transfer (REST) API, which has the following functions: uploading game results (scorecards), searching golf courses and downloading course information, and logging a player position during a game. Actions can be initiated from the mobile device 6 side against the backend server 4 or alternatively two-way messaging via mobile push notifications can be used.

**Figure 2** shows an exemplary situation where a golfer 1 identifies wirelessly a golf club 5 by his or her swing detection device 2 before a stroke. Each golf club includes an individual tag 3 that is connected to a golf club 5. Advantageously the tag 3 is fastened to the grip end of the club 5. Reference 5a depicts the head of the golf club. When the swing detection device 2 has read the tag 3 of the present club, it advantageously transmits club identification information wirelessly to the mobile device 6 of the golfer 1 (reference w4).

**Figure 3** shows an exemplary golfer 1 wearing a wristband type swing detection device 2 that contains a motion sensor 22, for example an accelerometer. As can be seen in Fig. 3, the swing detection device 2 will be near the grip of the golf club 5 during a golf stroke. In Fig. 3 the golfer 1 is concentrating the head of the golf club beside the golf ball 31 before a stroke attempt. This concentration phase is hereafter called as a stillness sub-gesture 30.

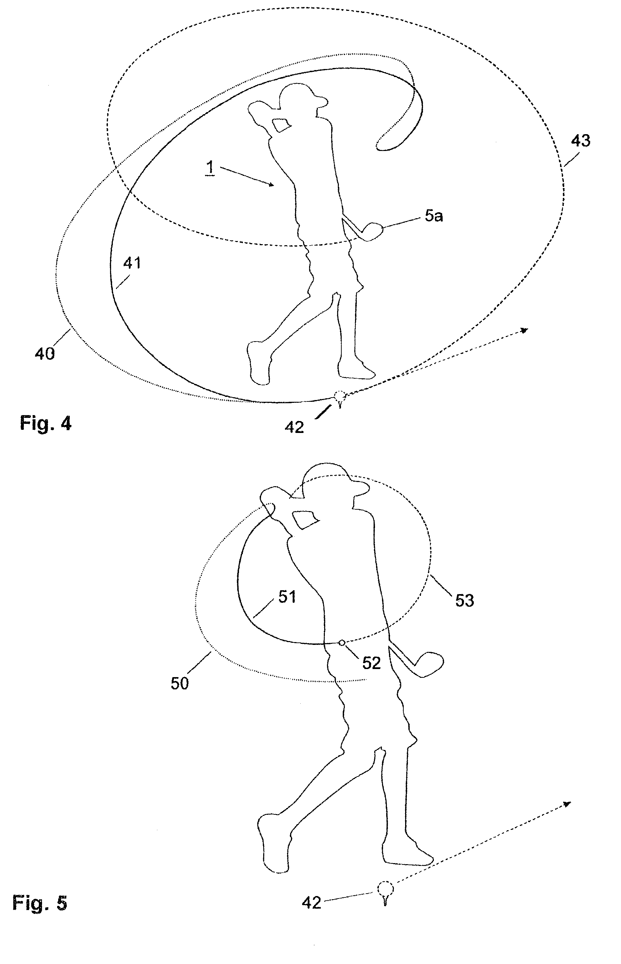

**Figure 4** shows a golfer 1 performing a full swing (full wave) with a driver club as an example of a typical golf swing. Let us consider a trajectory that the golf club's head 5a moves during the swing gesture. Said trajectory is typically divided advantageously into several sub-gestures. In this context a phase advantageously depicts an electric signal representing a sub-gesture and an event depicts a short incident during a gesture, for example a hit.

After 'stillness' 30 follows a 'backswing' 40 that is a sub-gesture where the golfer 1 brings the club head 5a back and up. The next sub-gesture is 'downswing' 41 where the golfer brings the club head 5a rapidly down to the ball. 'The collision' 42 is an event where the club head 5a collides with the golf ball. This may also be called as 'a hit sub-gesture' later on. The golf stroke ends up to 'a follow through' 43 sub-gesture where the golfer 1 brings the club head 5a forward and then to the pelvis level. While different kinds of clubs and swing types exist in the golf game, it is notable that all swings contain these same logical sub-gestures.

In order to detect said sequence of sub-gestures or motions, the swing detection device 2 with a motion sensor 22 can be attached either to the golf club 5 or to the golfer's hand. From a detection point of view an advantageous position for the motion sensor 22 would be inside the head 5a of the golf club 5. A more feasible approach may be to firmly attach a separate detection device to the shaft of the golf club. However, from the golfer's point of view the most practical and economical solution is to use a single swing detection device that can be attached to the golfer's wrist for the duration of a golf game.

In **Figure 5** is shown an exemplary trajectory depicting movements of the swing detection device 2 during a full swing. The motion starts with a 'backswing' sub-gesture 50 where the hand of the golfer 1 moves back and up. A 'downswing' 51 sub-gesture follows the 'back swing' sub-gesture. In the 'down swing' sub-gesture 51 the hand moves rapidly down and forward drawing a half circle in the air. After the collision 42 with the ball 31 the stroke ends up to a 'follow through' 53 sub-gesture where the hand of the golfer 1 moves forward and up almost completing a circle.

In a case where the head of the club 5a collides with the ball during the swing the forces due to the collision with the ball make the club 5 to vibrate. This vibration travels through the shaft of the club 5 all the way to the golfer's hand and to the swing detection device 2.

Series of motions of the hand clearly resemble the motions of a golf club's head as shown in Fig. 4. However, there are the following exceptions. An overall scale of the trajectory of the swing detection device 2 is smaller than the trajectory of the golf club head 5a. Therefore, also the speed of change and magnitude of the acceleration are smaller. Also the trajectory in the transition phase from 'backswing' to 'downswing' is simpler and shorter. The collision with the ball is experienced only indirectly via the golf club shaft and the golfer's hand. Also the trajectory in the 'follow through' sub-gesture is shorter. These exceptions complicate making a reliable decision when a stroke has been detected.

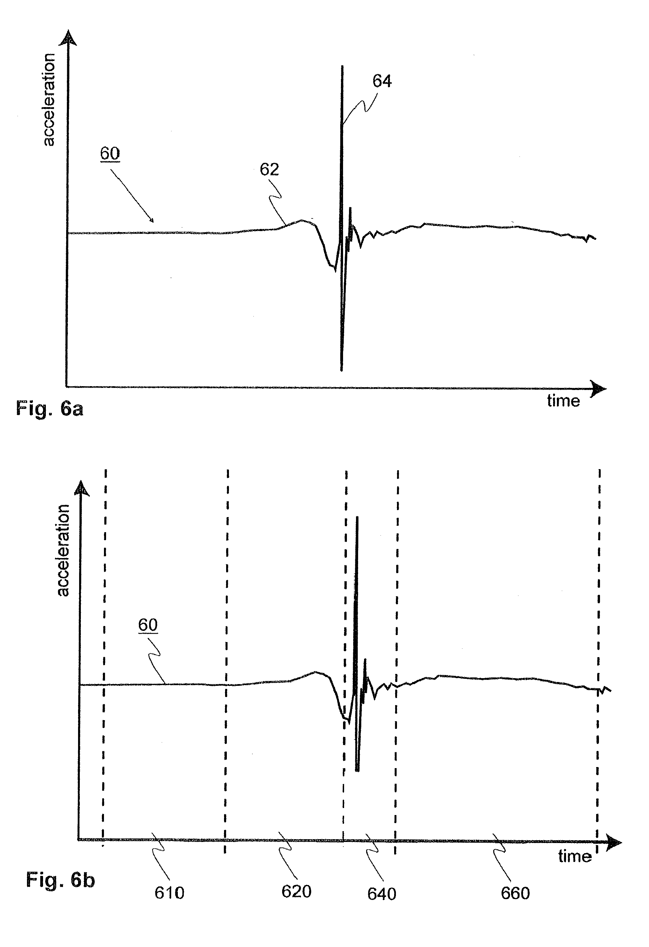

Figure 6a shows an example of an acceleration signal 60 captured with the swing detection device 2 according to the invention during a full swing with a driver club. The signal is an example of a typical acceleration signal in the golf game. The signal is captured with a 3-axis accelerometer sensor. For the sake of clarity only one axis is visualized in Fig. 6a. The acceleration sensor was firmly installed into a wristband type swing detection device 2. The swing detection device 2 was attached to the golfer's top hand holding the golf club 5.

The signal graph shows that an accelerometer 22 attached to the golfer's wrist can be used for producing a meaningful input signal for a golf swing recognizer algorithm because the signal 60 clearly responds to hand motions during a swing. When the amplitude 62 of the detected signal 60 changes, it reveals the collision 42 between the club head 5a and the golf ball 31. The collision can be seen as multiple sharp, high amplitude spikes 64. It is noteworthy that this oscillation due to collision is yet easily distinguishable despite of an indirect measurement via the club shaft, grip, glove, golfer's hand and the swing detection device body 2.

**Figure 6b** shows as an example the acceleration signal 60 of Fig. 6a when the signal 60 is divided according to the invention to four main phases of a golf swing. The main phases are 'stillness' 610, 'swing' 620, 'hit' or 'miss' 640, and 'follow through' 660.

During 'stillness' 610 the golfer concentrates. He or she stands straight holding the club 5 with both hands so that the club head 5a nearly touches the ball on the ground. As the golfer tries not to move, the measured acceleration signal is typically very steady for a while and hence this phase is called 'stillness'.

During 'swing' 620 the golfer slowly raises the club head ('backswing') and then rapidly swings it towards the ball ('downswing'). The measured acceleration signal 60 contains first a gentle ramp to one direction (due to 'backswing') and then a steeper ramp to the opposite direction (due to 'downswing'). Naturally the direction depends on the accelerometer polarity.

During 'hit' 640 (i.e. collision) the collision between the club head 5a and the golf ball 31 makes the club 5 to vibrate for a short period of time. This vibration travels via the club shaft to the golfer's hand and to the swing detection device 2. The 'hit' generates multiple declining sharp peaks of opposite directions in the acceleration signal. In the case of 'miss', this oscillating pattern is not present in the acceleration signal 60. During 'follow through' phase 660 the golfer gently decelerates the motion of the club while the club head continues to follow its trajectory and finally returns the club to the initial position. The measured acceleration signal 60 contains a gentle ramp to one direction and after a moment another gentle ramp to the opposite direction.

According to the invention, the phases of the golf swing (i.e. 'backswing', 'downswing', 'collision', 'follow through') and related sensor signal parts ('stillness', 'swing', 'hit' or 'miss', and 'follow through') are essential to such golf swing recognition algorithm. Therefore, the golf swing recognition algorithm according to the invention is based on phases depicted in Fig. 6b. The purpose of the golf swing algorithm according to the invention is to detect and notify when a golfer hits a ball. Therefore, the primary requirements for such algorithm include capability to detect a golf swing from other motions and when recognizing said golf swing, capability reliably to separate between 'hit' and 'miss'.

Secondary requirements may be a reasonably fast response time to notify about a 'hit' soon after swing gesture. Also low power consumption makes possible a mobile, battery powered swing detection device that has a long operating time. Also efficiency in terms of processing power and memory consumption facilitates a commercially feasible consumer class product.

When a captured acceleration sensor signal 60 is fed into the algorithm according to the invention, it will output a result that is either positive (i.e. 'hit') or negative (i.e. 'miss'). In the case of a positive output the algorithm brings out that the acceleration signal 60 contains a golf swing with a ball hit. In the case of a negative output the algorithm brings out that the acceleration signal 60 does not contain a golf swing at all or that the player missed the ball.

An output of a stroke detection algorithm can be correct or incorrect depending on the algorithm's capability to accurately classify different kinds of signals. By giving a label 'true' to depict correct output and 'false' to depict incorrect output the algorithm's outputs can be further classified to four groups based on their correctness. The output can be true positives (TP), false positives (FP), true negatives (TN), and false negatives (FN). An ideal recognition algorithm outputs only true positives and true negatives. Detection algorithms known in the art more or less frequently fail in this classification and output also false positives and false negatives.

The definition given above contains dualities. For each appearance of a false negative detection there will be one true positive detection that is missing. Both illustrate an error where the utilized detection algorithm failed to recognize a golf swing with a ball hit. Likewise, for each appearance of a false positive detection there will be a true negative detection that is missing. Both illustrate an error where the utilized detection algorithm notified about recognition of a hit when the signal actually did not contain a golf swing with a ball hit. Hence, if the test signals are known, the performance of the detection algorithm in terms of a correct classification of input signals can be fully understood with using either the terms true positive (TP) and false positive (NP) or true negative (TN) and false negative (FN).

During a game of golf most of the playing time is spent in activities other than hitting the ball such as moving to a new location, waiting for own turn, or practicing swings without hitting a ball. As a consequence, negative output from the detection algorithm is far more expected than a positive output. This makes the positive outputs more interesting and convenient to focus on in analysing the detection in the algorithm. In the following description true positives (TP) and false positives (FP) are used in the description to depict detection algorithm's decision making capability instead of their negative counterparts.

Any recognition or detection algorithm tries to maximize the amount of true positives and minimize the amount of false positives. A common consequence of an attempt to increase the classification accuracy of the recognition algorithm is that the recognition algorithm becomes more complex. This added complexity usually means spending more CPU cycles and memory and hence also more power, which is a limited reserve in a battery-powered mobile device.

According to the invention power can be saved remarkably by dividing the recognition algorithm into multiple stages where each stage has its own computer program module. In an exemplary case an acceleration signal of a golf swing may contain a ball hit. The original, complete signal is advantageously given to the lowest stage for execution. The lowest stage has the least accurate recognition algorithm but also the lowest power consumption. In a case where the recognition algorithm generates a positive output from the complete signal relevant parts of the complete signal are propagated for examination to the next higher stage that includes a more capable recognition algorithm. The highest stage with the most accurate recognition algorithm (with also the highest power consumption) makes the final decision about the 'hit' or 'miss'. The decision can take place only if the complete signal reaches the highest stage of the recognition algorithm. However, a negative decision can be made already before that. With the recognition algorithm according to the invention high momentary power consumption is minimized by limiting running time.

By utilizing the recognition algorithm according to the invention most power consuming components can be kept in sleep mode most of the time. However, a full processing capacity is available when needed. Therefore, maximum recognition accuracy can be achieved. A basic rule of the recognition algorithm according to the invention is that any stage of the recognition algorithm must not reject any true positive indication. However, any single stage does not need to reject all false positives but any source for false positives should be blocked by at least one stage of the recognition algorithm. In the recognition algorithm according to the invention all true positives (TP) pass all stages and all false positives (FP) get blocked at some stage of the recognition algorithm according to the invention.

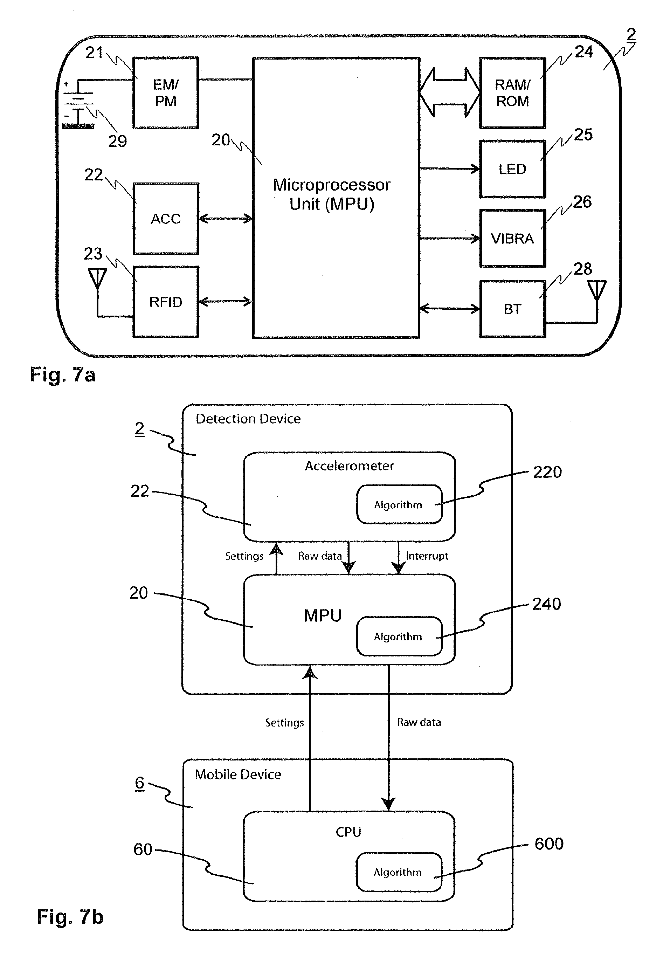

**Figure 7a** shows, by way of example, main functional parts of the swing detection device 2 according to the invention. The swing detection device 2 advantageously comprise a microprocessor unit 20 (MPU) with a memory unit 24 (RAM/ROM), an RFID reader 23 with an integrated antenna, a motion sensor, for example a 3-axis accelerometer 22 (ACC), a gyroscope, or a magnetometer, a Bluetooth connectivity module 28 (BT), a led (LED) 25 and a vibrator (VIBRA) 26 for user feedback. The swing detection device 2 comprises also a battery 29 and a power/energy management circuit 21 (EM/PM).

The swing detection device 2 may be connected to the mobile device 6 via a wireless connectivity link w4 such as Bluetooth. The link is mainly used for transferring raw or processed acceleration data of the stroke events, parameters and control messages. Communication periods are advantageously optimized in order to achieve better power efficiency and longer operation times. Other functionalities like updating the firmware of the swing detection device 2 over-the-air are also possible.

The vibrator 26 and led 25 are used for giving necessary indications and feedback to the golfer. Golfer disturbance should be minimized in all cases. Blinking and different colours of the led 25 are used for informing about the modes of the swing detection device 2 (i.e. power on indication, battery status and charging state) as well as possible fault situations. The vibrator 26 can advantageously be used for giving discreet notes of some key events such as successful tag reading, 'hit' detection and if the mobile device needs attention. The golfers can advantageously also opt for not using the vibrator 26 by configuration options.

The accelerometer 22 may be utilized also for detecting some simple user commands. A user command may be defined for example by a number of taps or any other detectable gesture like hand shaking. A double tap may advantageously mean 'end of course' and hand shaking 'start of course', for example. The exact meaning is implementation dependent.

**Figure 7b** shows an example how the recognition algorithm may be divided into computer program modules between the swing detection device 2 and mobile device 6. A natural extension to the previous is that different recognition algorithm stages do not need to be run on the same physical component inside the swing detection device 2. On the contrary, dividing recognition algorithm stages according to the invention to different processing units a remarkable power saving is acquired as a technical effect.

Figure 7b shows an example of an algorithm division into multiple processing units in a caddie system according to the invention. The swing detection device 2 is a physical entity that contains the motion sensor 22, for example an accelerometer, and hence must be attached to the golfer's hand or the golf club in order to capture the motions. The accelerometer component 22 may comprise a programmable logic and therefore it can advantageously execute the first stage of the algorithm 220 (i.e. a first program module) while the rest of the caddie system is in sleep mode. A positive recognition from the first stage of the recognition algorithm wakes up the microprocessor unit 20 (MPU) with an interrupt.

Thereafter streaming raw accelerometer signal to the MPU 20 begins after updating the accelerometer settings to this new operation mode. The second stage of the recognition algorithm 240 (i.e. a second program module) now runs on the MPU 20 of the swing detection device 2. A positive recognition from the second stage of the recognition algorithm triggers advantageously a wireless communication with an external mobile device 6.

After this relevant parts of the raw accelerometer signal are then streamed to mobile device's CPU 60 after updating the accelerometer settings. The third stage of the recognition algorithm 600 (i.e. a third program module) now runs on the powerful central processing unit 60 (CPU) of the mobile device 6. If necessary, more stages may be added, for example wireless communication to a backend service that is running on a remote backend server cluster 4 (not illustrated in Fig. 7b). After the last stage of the recognition algorithm according to the invention the signal for the final output of the algorithm is given (i.e. 'a hit').

The above-depicted division of the algorithm into multiple hosts provides another remarkable technical effect. The MPU 20 of the swing detection device 2 can be a light-weight component because it does not need to perform complex analysis on the acceleration signals in real time. Instead, the MPU 20 of the swing detection device 2 can advantageously send a signal capture containing potential data for a hit recognition to the mobile device 6 for a more complex analysis. After that the MPU 20 can continue to execute a less complex second stage of the recognition algorithm for finding another potential signal. Hence, the recognition algorithm division into multiple hosts according to the invention also provides the technical effect of running different recognition algorithm stages in parallel, which in turn allows one or more stages to process the signal non-real time and thus even more complex signal analysis.

It is obvious to a person skilled in the art that also other kinds of divisions are possible. The decision about the needed recognition algorithm stages depends for example on a system architecture, communication bandwidth and cost, as well as capabilities of the available hardware components. For example, if enough bandwidth is available from the swing detection device 2 to remote server cluster 4, then in that case all processing could be performed in the cloud. It is also possible that an accelerometer sensor 22 may contain enough processing power to process the complete stillness, swing and hit detection recognition algorithm alone.

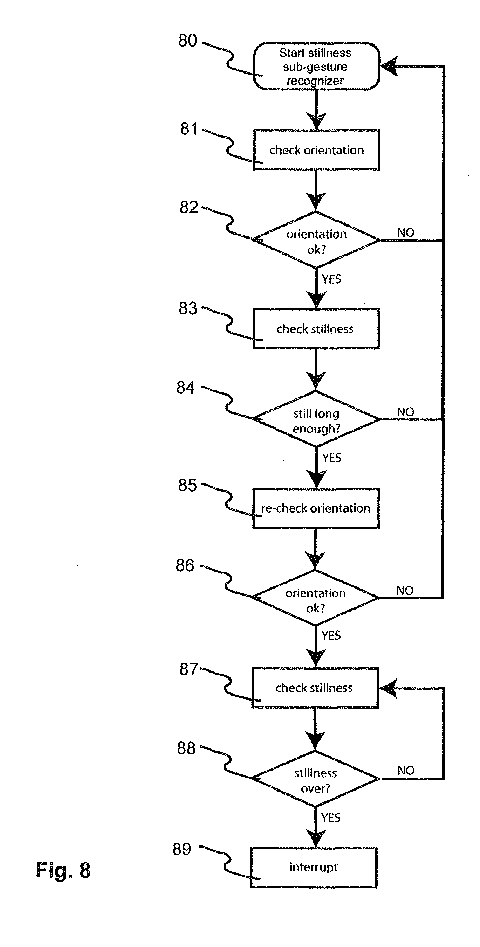

**Figure 8** shows an example of a stillness sub-gesture 30 recognizing procedure utilized in the algorithm according to the invention. The purpose of this stage of the recognition algorithm is to recognize the moment when the golfer concentrates on the upcoming swing. In this context some parts of the algorithm according to the invention may be called as a recognizer. A recognizer is a particular algorithm module configured to detect a particular swing sub-gesture or collision event. It may be hardware or a software based solution or a combination of them.

The stillness recognizer is best suited for the first stage of the recognition algorithm 220 because it is simple enough to be executed on the accelerometer's 22 logic part. Moreover, it removes the need to buffer data on the accelerometer 22 as all the other interesting signal parts come after it. This stage of the recognition procedure may advantageously be accomplished by a first program module executed in the accelerometer 22. The first program module may advantageously be implemented as a FPGA hardware implementation.

The features to be observed from the acceleration signal include detection of an orientation and stillness of the swing detection device 2, which can be observed either in parallel or in sequence. Figure 8 shows an example of the latter where a state machine re-evaluates each acceleration signal sample. The procedure begins from start state 80 where variables are initialized. An orientation check state 81 determines the orientation of the swing detection device 2 from one or more samples, for example by comparing the three signals from the 3-axis accelerometer 22 to pre-defined threshold levels. If the swing detection device 2 is held still as assumed, only 1 g acceleration due to gravity is present. When the detected gravity vector is divided into three orthogonal signals, the current orientation of the accelerometer 22 can be detected.

Next, in state 82 a decision is made based on the orientation. The procedure will proceed to the next state 83 only if orientation resembles the golfer's posture in the concentration phase before a swing.

'Stillness' is then detected in a separate state 83, for example by requiring that the first difference of the vector form of the acceleration signal stays between two thresholds for a certain period of time. If this requirement holds long enough, then after state 84 the procedure proceed to the next state 85.

At this state 85 the orientation is checked again and the golfer's posture gets confirmed in state 86. In order to adapt to different concentration times, 'stillness' detection is performed again in state 87, but this time the procedure waits until stillness is over in state 88, i.e. until motion is detected. This motion is assumed to be due to the golfer beginning the 'backswing' and hence the sleeping MPU 20 of the swing detection device 2 is now woken up with an interrupt in state 89.

Following the acceleration signal time-wise, after the stillness phase 610 comes the swing phase 620 and after that the hit or miss phase 640. In golf there are multiple different types of swings such as full swing, half swing, duff, pitch, and putt. Moreover, a golfer's personal style and experience is most visible in this phase 620. Hence, the recognition algorithm for swing phase 620 must tolerate much variation, which adds complexity to it.

On the other hand the next phase 640, 'hit' or 'miss', is much simpler to recognize partially due to very distinctive high amplitude peaks, partially due to a fairly limited pass band for frequencies that come from the club oscillation. Moreover, if a potential hit is not present in the acceleration signal 60, analysis can be stopped immediately and the more complex swing analysis 620 can be skipped altogether. Therefore, the 'hit' or 'miss' phase 640 is more suitable to be executed in the second stage of the recognition algorithm 240 than the swing phase 620.

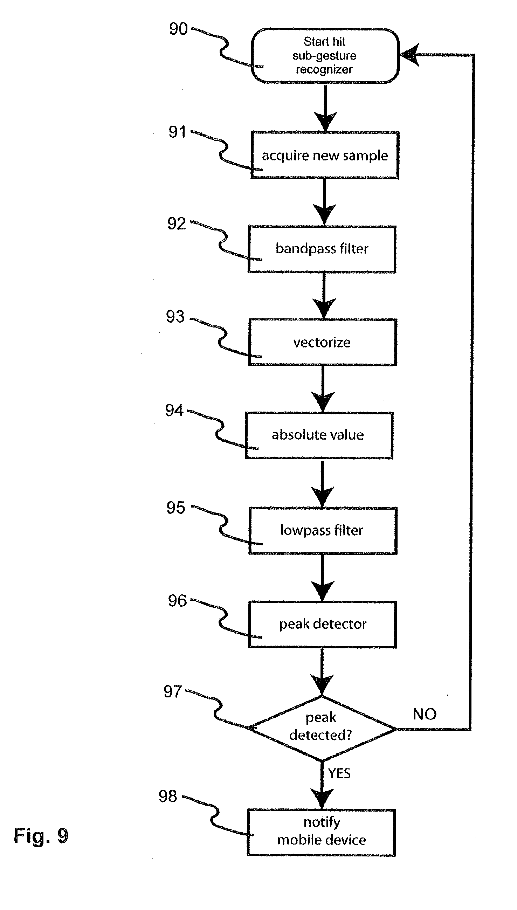

Figure 9 shows an example of a hit recognizing procedure. The MPU 20 of the swing detection device 2 has been woken up by an interrupt signal 89 from the stillness recognition procedure. The hit recognizing procedure is intended for the second stage of the recognition algorithm 240 and aims to recognize the moment when the club collides with the ball (i.e. impact). This stage of the recognition procedure may advantageously be accomplished by a second program module executed in the MPU 20 of the swing detection device.2.

The hit sub-gesture recognizing procedure starts with initialization state 90. Next, a new acceleration signal sample is acquired from the accelerometer sensor 22, state 91. The acceleration signal comprises values from the accelerometer's X, Y, and Z axis. The sample is processed in state 92 with a bandpass filter to attenuate all other than club oscillation frequencies. Next, the three values representing the 3-axis of the accelerometer 22 are combined to form a vector representation of the acceleration in state 93. The negative side of the acceleration signal is advantageously reflected to the positive side (i.e. compose an absolute value), state 94. The absolute value vector representation is then low pass filtered to smoothen the signal, state 95. As a result of these pre-processing steps, a ball hit appears as a single peak on the positive side, which can be detected with a fairly simple peak detector, state 96.

However, this recognition procedure may not distinguish for example a club hitting a ball from tapping the detection device 2 with a finger. Hence, if a potential hit is found, state 97, the mobile device 6 is notified, state 98, and relevant parts of the acceleration signal 60 are transferred from a local buffer of the swing detection device 2 to the mobile device 6 for further analysis, i.e. to stage three of the recognition algorithm 600.

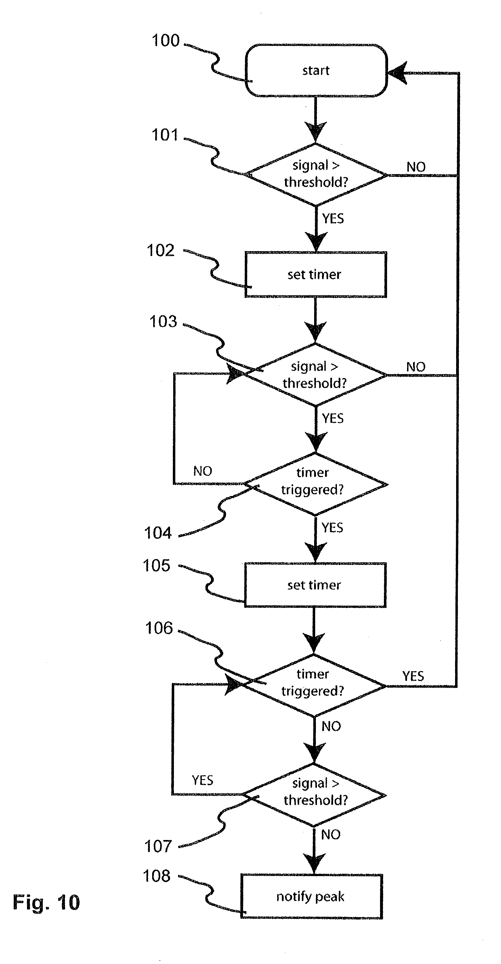

Figure 10 shows an example of the peak recognizing procedure that is executed in states 96 and 97 of Fig. 9. While the bandpass and low pass filters can be implemented for example with a classic FIR filter (Final Impulse Response), a peak detector design is not so obvious. The peak recognizing procedure is a part of the second stage of the algorithm 240 and it aims to recognize a peak that passes a predefined threshold level. In addition, the peak length is limited to minimum and maximum length.

The peak detection procedure starts with initialization, state 100, and then keeps on reading in new samples until one that passes a set threshold level is found, state 101. A potential peak has now begun and a first timer is initialized for measuring peak minimum duration, state 102. Samples are then compared against the set threshold, state 103, to ensure that the peak does not end prematurely before a minimum duration timer triggers in state 104.

If the found peak is long enough, state 104, a second timer is initialized in state 105 for measuring maximum duration of the detected peak. The second timer is advantageously not triggered in state 106 before the signal drops below a predefined threshold level, state 107.

When the signal has dropped below said threshold, a peak is notified in state 108 (i.e. state 98 in Fig. 9).

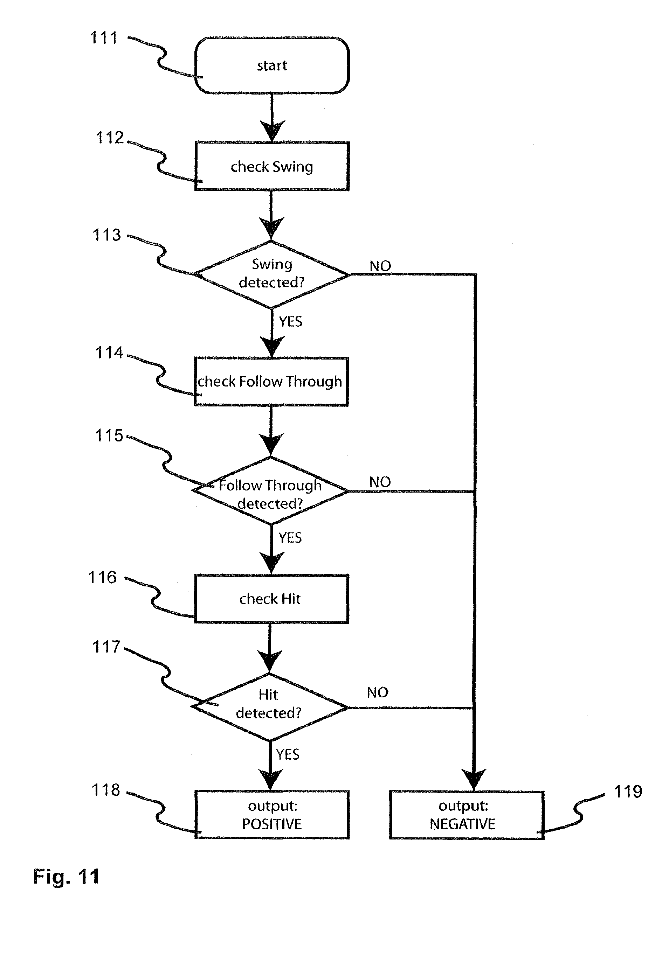

Figure 11 shows an overview of a recognition procedure based on the last stage algorithm 600 that advantageously may be executed in the CPU 60 of the mobile device 6. A moment of stillness (state 89 in Fig. 8) and a potential hit (state 98 in Fig. 9) have already been detected by lower algorithm stages 220 and 240 that advantageously have been executed in the accelerometer 22 and/or in the MPU 20 of the swing detection device 2.

The 'follow through' procedure will check from the buffered signal parts whether or not enough relevant features for a 'swing', 'hit' and 'follow through' are present. This procedure will output the final decision of the swing detection system according to the invention. This stage of the recognition procedure may advantageously be accomplished by a third program module executed in the CPU of the mobile device 6.

The last stage procedure starts from initialization, state 111, and proceeds to analyse 'swing' features, state 112. In this state 112 the procedure must take into account different kinds of swing types in golf for example with multiple parameter sets. The implementation is advantageously a state machine that tracks the signal form with thresholds and timers. Alternatively the implementation may be a tester for the signal's rate of change such as a ramp detector. Or the implementation may be based on cross-correlation with a known swing signal coupled with a peak detector. Even a trained Hidden Markov model (HMM) may be utilized as a gesture recognizer.

If a 'swing' cannot be detected in state 113, the procedure immediately outputs a negative decision, state 119.

If a 'swing' is present in the signal, then a 'follow through' will be analysed, state 114, and tested, state 115, in a similar manner using similar techniques as in state 112.

If a 'follow through' cannot be detected, state 115, the procedure immediately outputs a negative decision, state 119.

If decisions in states 113 and 115 are both positive, the procedure moves to state 116.

At the end a more careful 'hit' analysis will be performed in state 116. In state 116 the goal is to reveal the signal pattern due to oscillating club and distinguish it from other high amplitude spikes such as tapping the detection device with a finger, clapping hands together, turning the detection device very rapidly or shaking the detection device.

There are at least three methods to reveal a 'hit' in decision making in state 117. In the first method an oscillation pattern of the golf club is searched for. If it is found, a positive result is outputted, state 118.

In a second possible method to reveal a 'hit' all known sources for false positive signals are rejected by explicitly looking for their features from the signal (for example via cross-correlation with a known bad signal). In that method a negative result is outputted, state 119, if any of the false positive signals are present.

In a third method a hybrid approach utilizing features of both the above-mentioned methods may be utilized.

Naturally, a recognition algorithm may give more weight on some features over the others, up to the point that some parts of the signal (such as 'swing' or 'follow through') may be omitted completely. Especially, if a club type can be detected, an algorithm tailored for the particular club type can be used. This approach can assist in acquiring good detection accuracy when very different kinds of swings need to be supported. For example the recognition algorithm version for a driver club might be different than the recognition algorithm version for a putter club as these clubs are typically used for different kinds of swings.

Any of the recognition method steps or recognition procedure phases or states described and illustrated in Figures 8-11 may be implemented by program modules including computer program instructions that are executable in a general-purpose or special-purpose processor and that are stored in a computer-readable storage medium (for example a disk, memory or the like). The program module may also be implemented by a FPGA circuit. References to 'computer-readable storage medium' and 'computer' should be understood to encompass specialized circuits such as field-programmable gate arrays, application-specific integrated circuits (ASICs), USB flash drives, signal processing devices, and other devices.

Some advantageous embodiments according to the invention were described above. The invention is not limited to the embodiments described. The inventional idea can be applied in numerous ways within the scope defined by the claims attached hereto.

## Claims

1. A golf swing and ball hit recognition system comprising:
- a swing detection device (2) configured to be attached to a golf player's wrist or forearm, the detection device comprising:
- a battery (29)
- a power/energy management circuit (21);
- a tag reader (23);
- a motion sensor (22);
- a processor unit (20) comprising a memory unit (24) including a computer program;
- the memory unit (24) and the computer program configured to, with the processor unit (20), cause the swing detection device (2) at least to process motion sensor (22) data and;
- a wireless transceiver (28); and
- a mobile device (6) comprising computer program to process motion data received from the swing detection device (2),
**characterized in that** the ball hit recognition process comprises at least one detection stage in the swing detection device (2) or in the mobile device (6) where a particular detection stage (220, 240, 600) comprises a particular gesture recognizer accomplished by program modules that are configured to recognize particular golf swing sub-gestures (30, 40, 41) or a collision event (42) between a golf club and a golf ball (31).

2. The system according to claim 1, **characterized in that** a recognizer program module comprises a field-programmable gate array (FPGA) or a software application.

3. The system according to claim 1, **characterized in that** the golf swing and ball hit recognition procedure is divided into a stillness recognizing phase (80-89), a swing recognizing phase (112, 113), a collision recognizing phase (90-98, 116-117), and a follow through recognizing phase (114, 115).

4. The system according to claim 1, **characterized in that** the motion sensor (22) is one of the following: an accelerometer, a combination of accelerometers, a gyroscope, a combination of an accelerometer and a gyroscope, a magnetometer, or a combination of a gyroscope and a magnetometer.

5. The system according to claim 1, **characterized in that** the mobile device (6) is a dedicated device or a general purpose device with added processing software.

6. The system according to claim 2, **characterized in that** the gesture recognizers comprise at least one of the following program modules:
- a first program module to detect a stillness sub-gesture (30) preceding a swing sub-gesture (40, 41);
- a second program module to detect a collision event (42) of the golf club with a golf ball (31);
- a third program module to detect a swing gesture including a combination of a backswing (40) and a downswing sub-gesture (41), collision event (42), and a follow through sub-gesture (43).

7. The system according to claim 6, **characterized in that** the first program module comprises a stillness (30) recognizer configured to detect device orientation (81, 82, 85, 86) and device stillness (83, 87, 88).

8. The system according to claim 7, **characterized in that** the orientation and stillness sub-gesture (30) recognizer comprises a state machine with thresholds and timers configured to be executed in the motion sensor (22).

9. The system according to claim 6, **characterized in that** the second program module comprises a collision event (42) recognizer configured to:
- stream data (90, 91) from a 3D motion sensor (22);
- filter (92) data of the motion sensor with a bandpass filter;
- vectorize (93) the data of X, Y, and Z axis of the 3D motion sensor;
- compose (94) an absolute value from the motion sensor vector data;
- filter (95) said absolute values with a low pass filter;
- detect (96, 97) the collision with the ball from said data stream of absolute values, and if detected;
- initialize (98) a data transfer from the 3D motion sensor (22) to the mobile device (6).

10. The system according to claim 9, **characterized in that** the second program module further comprises a state machine with thresholds and timers configured to be executed in the MPU (20) of the swing detection device (2).

11. The system according to claim 6, **characterized in that** the third program module comprises a collision event (42) recognizer configured to:
- stream data from a 3D motion sensor (22) of the swing detection device (2);
- filter data of the motion sensor stream with a bandpass filter;
- vectorize said data stream;
- compose an absolute value from the motion sensor vector data;
- filter said absolute values with a low pass filter;
- stream the filtered values; and
- detect a hit due to a peak found from stream of the filtered values.

12. The system according to claim 11, **characterized in that** the third program module further comprises a backswing recognizer and a downswing recognizer configured to detect a backswing sub-gesture (40), a transition between the backswing sub-gesture (40) and a downswing sub-gesture (41) and to detect the downswing sub-gesture (41).

13. The system according to claim 11, **characterized in that** the third program module comprises a peak detector including a state machine with thresholds, timers and filters that are configured to be accomplished by the third computer program module when it is executed in the CPU of the mobile device (6).

14. The system according to claim 6, **characterized in that** the third program module comprising the collision recognizer is configured to:
- stream data from the motion sensor;
- filter data of a 3D motion sensor with a bandpass filter;
- calculate cross-correlation between the acquired signal and an example collision signal, and;
- detect a hit due to a peak found from said cross-correlation signal.

15. The system according to claim 14, **characterized in that** third program module is configured to be executed in the CPU of the mobile device (6).

16. A swing detection device (2) configured to be attached to a golf player's wrist or forearm, the detection device comprising:
- a battery (29);
- a power/energy management circuit (21);
- a club identification reader (23);
- wireless transceiver (28);
- a motion sensor (22);
- a processor unit (20) comprising a memory unit (24) including a computer program module;
- the memory unit (24) and the computer program module configured to, with the processor unit (20), cause the swing detection device (2) at least to process motion sensor (22) data,
**characterized in that** a golf ball hit recognition process comprises at least one detection stage in the swing detection device (2) and that a first detection stage comprises a particular gesture recognizer accomplished by program modules that are configured to recognize at least a first golf swing sub-gesture (30) and a second golf swing sub-gesture (42).

17. The swing detection device according to claim 16, **characterized in that** the program modules comprise at least a first program module configured to recognize a stillness sub-gesture (30) when the first program module is executed in the motion sensor (22).

18. The swing detection device according to claim 17, **characterized in that** the program modules comprise also a second program module configured to recognize a collision (42) of a golf cub (5) with a golf ball (31) when the second program module is executed in the processor unit (20) of the swing detection device (2).

19. The swing detection device according to claim 18, **characterized in that** the second program module comprises a hit recognizer configured to:
- stream data (90, 91) from the 3D motion sensor (22);
- filter (92) data of the motion sensor with a bandpass filter;
- vectorize (93) the data of the X, Y, and Z axis of the 3D motion sensor;
- compose (94) an absolute value from the motion sensor vector data;
- filter (95) said absolute values with a low pass filter;
- detect (96, 97) the collision event (42) with the ball from said data stream of filtered values, and if detected;
- initialize (98) a data transfer from the 3D motion sensor (22) to the mobile device (6).

20. A swing detection device substantially as any one embodiment herein described with reference to the accompanying drawings.
